# EUROPEAN PATENT APPLICATION

(11) **EP 2 528 182 A2**
(43) Date of publication of application: **28.11.2012**
(21) Application number: 12169390.7
(22) Date of filing: 24.05.2012
(51) Int. Cl.: H02J 3/00

(54) **Power distribution network load forecasting**

(30) Priority: 26.05.2011 US 201113116222
(71) Applicant: General Electric Company, Schenectady, NY 12345 (US)
(72) Inventor: McDonald, Jason Louis, Melbourne, FL 32904 (US); Grey, Audley, Melbourne, FL 32904 (US)
(74) Representative: Cleary, Fidelma

(57) **Abstract**

A load forecasting system (200) for a power distribution network (100) receives power usage data from a load (228) and accesses a power demand profile database (230). The system selects and stores a power demand profile (218, 219, 232, 234, 236) in a profile pool (216) based on how close its accuracy is to the desired accuracy. The system may use a desired accuracy, the power usage data, and a power demand profile (218, 219, 232, 234, 236) retrieved from the database (230).

## Description

### BACKGROUND OF THE INVENTION

The disclosure relates generally to so-called "smart grid" hardware, software, and equipment for electricity distribution, and more particularly, to a method and apparatus for power distribution network load forecasting, demand prediction, and/or management.

Power distribution networks include master stations, transmission lines/networks, substations, distribution lines/networks, and customers. Substations in high and medium voltage distribution networks can include primary devices, such as electrical cables, lines, bus bars, switches, power transformers, and instrument transformers, which are typically arranged in switch yards and/or bays. The primary devices may be automated using a substation automation (SA) system that can use microprocessor-based, programmable secondary devices generally referred to as intelligent electronic devices (IEDs). IEDs protect, control, and monitor the primary devices. Since SA systems usually require interoperability between substation devices, a substation bus, such as an Ethernet network employing, for example, the IEC 61850 SA protocol, can be used to allow communication between devices and/or between the substation and external devices, such as control centers, remote operators, and/or other substations. For example, the substation bus could be connected to and/or controlled by a gateway device, such as a substation computer, that would also be connected to the Internet to allow communication between the substation and control centers, other substations, remote operators, and the like.

Load forecasting in such networks is important inasmuch as it influences security and efficiency in the supply of electric power. Equipment overload, rolling blackouts, brownouts, and other undesirable events can be avoided while enhancing responsiveness and efficiency of the grid. Load forecasting in its simplest form is anticipating the amount of electricity required by customers in the future, and it is one of the most important tasks in any utility. Currently, the similar day (SD) method is used in many energy management systems (EMS). The SD forecasting method is based on daily minimum and maximum load values, measured in amperes, kilowatts, kilo-VARs, and/or apparent power, for example, and a profile selected for the day in question. The forecasting is typically made down to a substation level, with feeders from the substation being allocated a percentage of the forecast power demand based on historical usage data.

Distributed management systems (DMS) proposed by GE and others differ from EMSs in that an unbalanced DMS has far more circuits and buses to account for in its model, which leads to a much larger amount of data to manage. With larger DMS systems potentially using a profile for each node, device, and/or customer, the profile pool could include millions of profiles, causing scaling issues. It is therefore advantageous to better manage and/or reduce the amount of processing required to handle data during load forecasting, such as by reducing a number of profiles required in a profile pool, while retaining accuracy as desired.

### BRIEF DESCRIPTION OF THE INVENTION

Embodiments of the invention described and claimed herein address load forecasting database sizing and accuracy for a power distribution network, such as a power distribution network including a power source, a master station, a transmission network, and a load.

In a first aspect, the invention resides in a method of forecasting load for a power distribution network, the power distribution network including a power source, a master station, a transmission network, and a one load. Power usage data from the load is accessed, and the load is identified. At least one target value, including at least a desired accuracy, is acquired, as well as a derived solution option power demand profile and an existing power demand profile, based on the power usage data and the identifying information. A respective accuracy of each acquired power demand profile is determined and compared to the desired accuracy. The acquiring of a derived solution option power demand profile, the acquiring of an existing power demand profile, the determining a respective accuracy of each acquired power demand profile, and the comparing each respective accuracy to the desired accuracy are repeated until each power demand profile is at least as accurate as the desired accuracy. Each power demand profile that is at least as accurate as the desired accuracy is stored in a profile pool.

In another aspect, the invention resides in a computer program for power distribution network load forecasting, the power distribution network including a power source, a master station, a transmission network, and a load. The computer program comprises computer program code means adapted to perform the above method and in the computer program embodied on a computer readable medium.

In yet another aspect, the invention resides in a load forecasting system for a power distribution network having a computing device configured to communicate with and receive power usage data from the load and an object that is a computer readable storage medium configured to allow access by the at least one computing device. A power demand profile database may be stored on the computer readable storage medium, the power demand profile database including a power demand profile, and the system includes a profile selector formed by computer program code executed in the computing device. The profile selector is configured to acquire at least one target value, including a desired accuracy, the power usage data, and at least one power demand profile. The profile selector designates a derived solution option power demand profile based on the power usage data and designates an existing power demand profile. A respective accuracy of each acquired power demand profile is determined, and the profile selector compares the respective accuracy to the desired accuracy. Responsive to a power demand profile being at least as accurate as the desired accuracy, the profile selector selects the power demand profile that is at least as accurate as the desired accuracy. If no power demand profile is at least as accurate as the desired accuracy, the profile selector acquires another of each power demand profile and repeats at least the determining and the comparing. Each selected power demand profile is stored in a profile pool on a computer readable storage medium.

Other aspects of the invention provide methods, systems, program products, and methods of load forecasting, which include and/or implement some or all of the actions described herein. The illustrative aspects of the invention are designed to solve one or more of the problems herein described and/or one or more other problems not discussed.

### BRIEF DESCRIPTION OF THE DRAWING

Embodiments of the present invention will now be described, by way of example only, with reference to the accompanying drawings in which:
FIG. 1 shows a schematic diagram of a power distribution network in which embodiments may be employed.
FIG. 2 shows a schematic diagram of a load forecasting system according to embodiments.
FIG. 3 shows a schematic flow diagram of a method according to embodiments.
FIG. 4 shows a schematic flow diagram of a method according to embodiments.
FIG. 5 shows a schematic diagram of an illustrative computing environment in which embodiments may be implemented.

It is noted that the drawings may not be to scale. The drawings are intended to depict only typical aspects of the invention, and therefore should not be considered as limiting the scope of the invention. In the drawings, like numbering represents like elements between the drawings.

The detailed description explains embodiments of the invention, together with advantages and features, by way of example with reference to the drawings.

### DETAILED DESCRIPTION OF THE INVENTION

As indicated above, aspects of the invention provide a system, method, and computer storage product for forecasting load on a power distribution network or on a portion thereof. As used herein, unless otherwise noted, the term "set" means one or more (i.e., at least one) and the phrase "any solution" means any now known or later developed solution. Similarly, where elements are described and/or recited in the singular, it should be recognized that multiple of such elements are included unless otherwise noted. Thus, "a" generally means "at least one" throughout the instant application, including the claims.

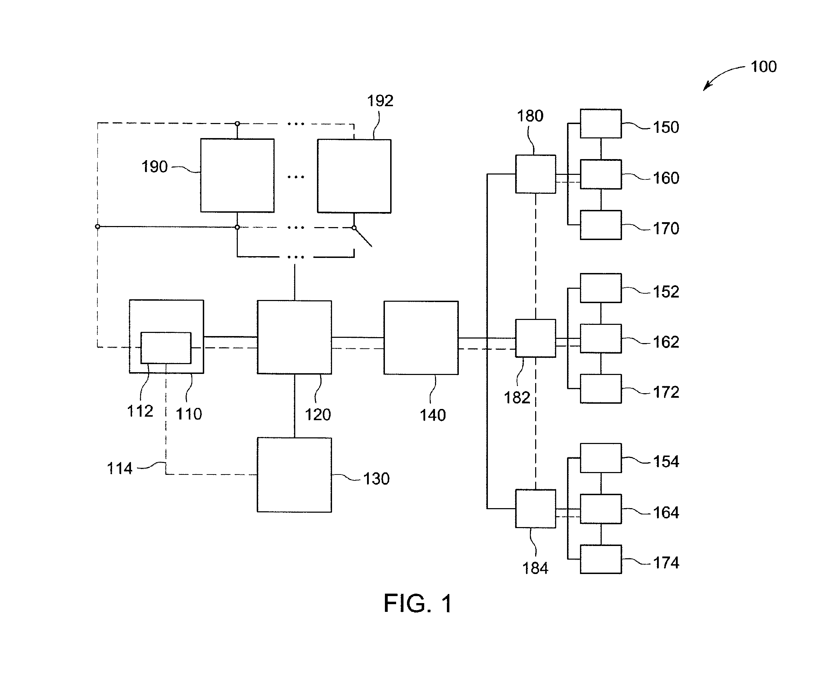

With reference to the accompanying drawings, FIG. 1 shows a schematic diagram of a power generation and distribution network 100 in which master stations 110 are connected to a transmission network 120, such as high tension power lines. Transmission customers 130 may be connected to transmission network 120, and at least one substation 140 takes power from transmission lines 120 and sends it to sub-transmission customers 150, 152, 154, primary customers 160, 162, 164, and/or secondary customers 170, 172, 174 via distribution lines or feeders 180, 182, 184. One or more power sources 190, 192 may be connected to the network 100 by master stations 110 to provide power that is distributed by network 100 as needed.

A master station 110 in embodiments includes at least one computing device 112 arranged to control power distribution network components, including to connect and/or disconnect power sources 190, 192 to/from transmission network 120. In addition, computing device 112 in embodiments may start and/or shut down power sources 190, 192, such as coal/gas-fired power generation stations, solar power generation stations, hydroelectric power generation stations, fuel-cell power storage facilities, and other power sources as may be appropriate and/or desired, to more closely match power supply to power demand on the network 100. Computing device 112 may employ one or more communications arrangements 114 to communicate with power distribution network components and/or power sources 190, 192, such as Ethernet-based communications.

As indicated above, typical load forecasting is not done down to the level of the end user, such as sub-transmission customers 150, 152, 154, primary customers 160, 162, 164, and/or secondary customers 170, 172, 174, but down to the substation level 140. Generally, the potential demand from such end users is taken into account by allocating each feeder 180, 182, 184 of a substation 140 a percentage of forecast demand for the substation 140. The allocation is typically made on the basis of historical usage data of a respective feeder 180, 182, 184.

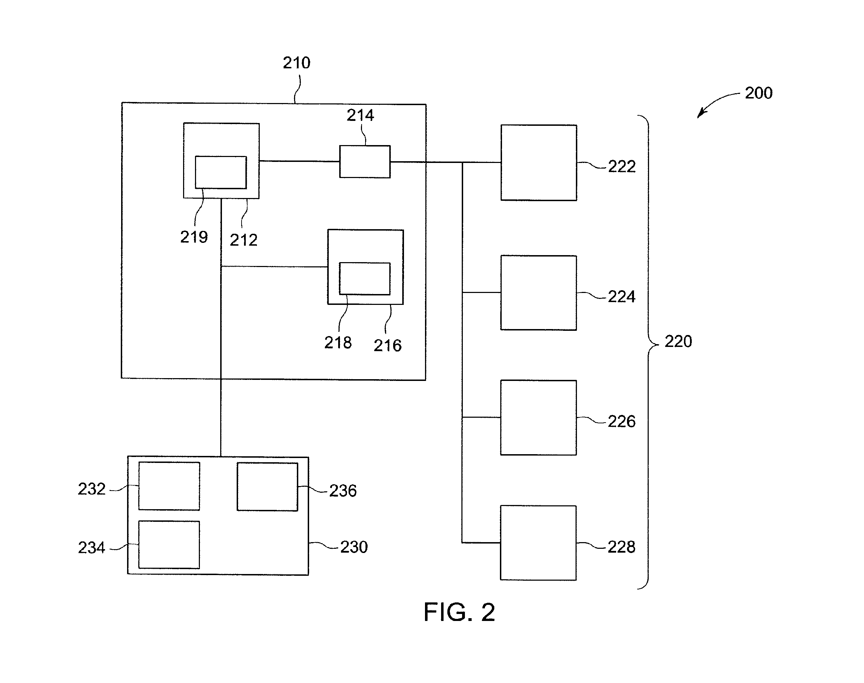

An embodiment of a power distribution network load forecasting system 200 is shown schematically in FIG. 2. A computing device 210 may include a computer program product form of embodiments that may include an object that is a computer readable storage medium. A profile selector 212 may be configured to use a communications arrangement 214 to access, receive, or otherwise acquire information or data from at least one power distribution network component 220, such as a power source 222, a master station 224, a transmission network 226, a load 228, and/or other component 220. For example, profile selector 212 may receive power usage data, identifying information, and/or other data from the at least one component 220.

To efficiently control power generation and distribution, profile selector 212 in embodiments may create a profile pool 216 including relatively few profiles even when millions of profiles are assessed for use. Profile pool 216 may include at least one existing profile 218 and may also have been previously generated by embodiments of the instant invention or by another technique. As used herein, "existing profile" means a profile that was previously selected as a most accurate profile or otherwise selected as a potential starting profile for embodiments of the invention.

In embodiments, profile selector 212 may access a database 230 of relationally-connected smart day (SD) power demand profiles 232, 234, 236 of grid components, days of the week (DoW), months of the year (MoY), and phases, though other variables may be introduced as appropriate and/or desired within the scope of embodiments. Existing profile 218 may be a most accurate profile for a particular component that may be found in database 230, may be a past existing profile 232 of database 230, and/or may be a most accurate profile as previously determined by the instant or another technique, such as from a previously generated profile pool. In embodiments, historical data, DoW, MoY, and/or phase may be employed to select a derived solution option profile 219 for a particular component as will be described. As used herein, "derived solution option profile" means a profile from database 230 that in embodiments is considered closest to what is needed to describe and/or predict power demand/usage for a particular component, DoW, MoY, and/or phase. Relationships between profiles may be made, for example, based on a degree of error or accuracy desired, enabling profiles to be shared regardless of scale of the components in question.

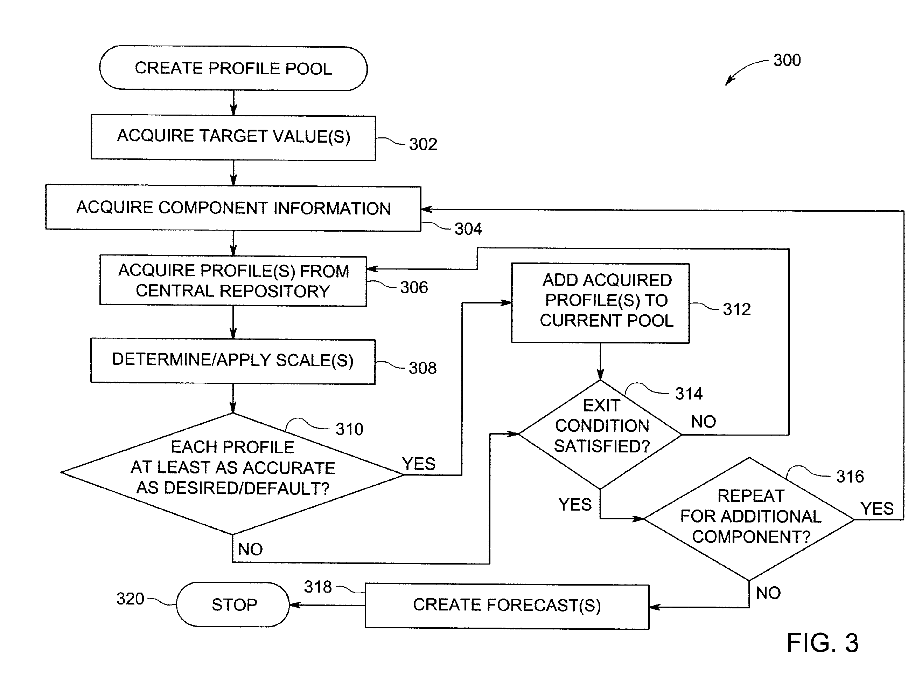

An example of a method 300 of creating a profile pool from a profile database and/or a previously-determined profile pool in embodiments is depicted schematically in FIG. 3. At least one target value is acquired (block 302), such as by receiving user input or by loading a stored value. For example, in embodiments of the invention a target value may be a desired accuracy and/or a desired number of profiles to be included in profile pool 216. Where a desired number of profiles is used as a target value, embodiments of the invention may also use a desired accuracy acquired from a storage device and/or by user input. For example, a predefined minimum desired accuracy may be stored in a storage device and used as a default value so that a user need not enter a value and/or so that a user may review the default value and change the value if the user finds the default value to be unacceptable. Similarly, where a desired accuracy is used as a target value, embodiments may also use a desired number of profiles acquired from a storage device and/or by user input. Like in the example above, a predefined maximum number of profiles could be used as a default value for automatic loading and/or review by a user. Further, more than one target value could be employed for each criterion such that there may be minimum, maximum, and/or other values employed by the system as may be appropriate and/or desired.

.Power distribution network component and/or environment information is acquired (block 304), and at least one power demand profile is acquired (block 306), such as at least one past existing power demand profile 232, at least one past derived solution option power demand profile 234, and/or at least one currently used power demand profile 236 being retrieved from database 230, for example. At least one scale may be determined for each profile (block 308), such as by determining minimum and maximum values and/or average values observed in historical data for each component, DoW, MoY, and phase in embodiments. These multiple scales when applied to a curve or profile yield an improved power demand forecast for each component, DoW, MoY, and phase. A generic profile may be drawn from a forecast database into a profile pool, and information about a component, DoW, MoY, and/or phase is used to determine a scale that should be applied, and a comparison may be performed of an existing profile and a derived solution option profile once scaling has been performed.

If a profile is at least as accurate as the desired accuracy (checked at block 310 in FIG. 3), that profile is added to a profile pool (block 312), and a check is made to see if an exit condition is satisfied (block 314). If a profile is not at least as accurate as the desired accuracy (block 310), then the exit condition check (block 314) may be performed without adding the profile to the profile pool. If an exit condition is not satisfied (block 314), an additional profile may be acquired (block 306), and blocks 306-314 may be repeated. If an exit condition is satisfied (block 314), and if an additional component is to be considered (block 316), blocks 304-314 may be repeated. If an exit condition is satisfied (block 314), but no more components are to be considered (block 316), a forecast may be created (block 318), and the method may stop (block 320). An exit condition may be, for example, the profile pool overall having a desired/default accuracy and/or the profile pool having a desired/default number of profiles, though other conditions may be used as appropriate, necessary, and/or desired. Method 300 and/or aspects of it may be repeated until a current or actual accuracy is at least the desired accuracy.

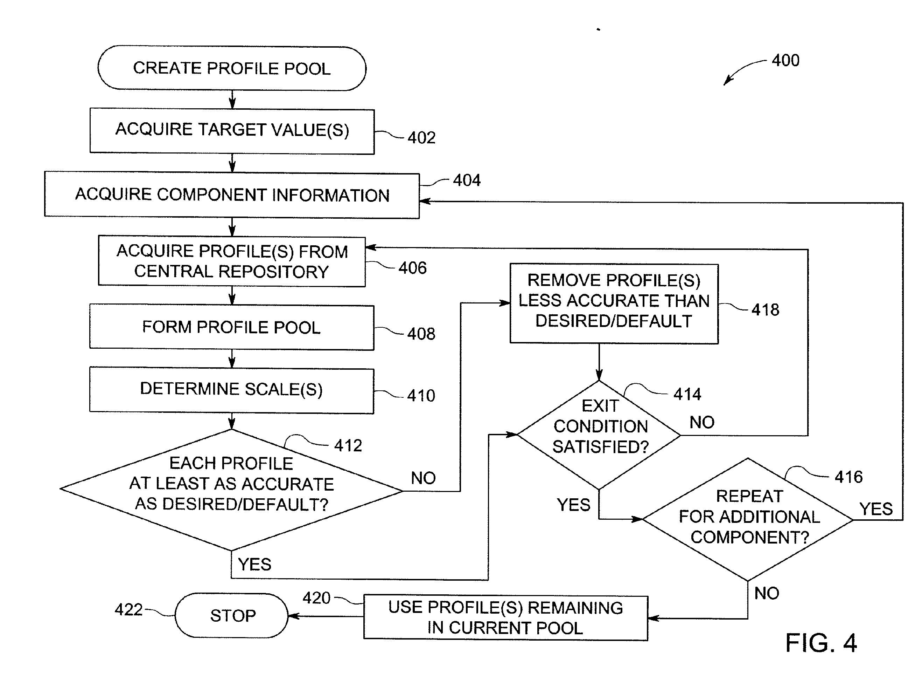

In another embodiment, shown as method 400 in FIG. 4, at least one target value is acquired (block 402), and component/environment information is acquired (block 404). The target value(s) may be acquired by any suitable method, such as by receiving user input or by loading a stored value. For example, in embodiments of the invention a target value may be a desired accuracy and/or a desired number of profiles to be included in profile pool 216. Where a desired number of profiles is used as a target value, embodiments of the invention may also use a desired accuracy acquired from a storage device and/or by user input. For example, a predefined minimum desired accuracy may be stored in a storage device and used as a default value so that a user need not enter a value and/or so that a user may review the default value and change the value if the user finds the default value to be unacceptable. Similarly, where a desired accuracy is used as a target value, embodiments may also use a desired number of profiles acquired from a storage device and/or by user input. Like in the example above, a predefined maximum number of profiles could be used as a default value for automatic loading and/or review by a user. Further, more than one target value could be employed for each criterion such that there may be minimum, maximum, and/or other values employed by the system as may be appropriate and/or desired.

At least one power demand profile is acquired (block 406), such as from a central or distributed profile repository, to form a profile pool (block 408), and a scale is determined, if necessary, for each profile (block 410). In embodiments, a generic profile may be drawn from a forecast database into a profile pool, and information about a component, DoW, MoY, and/or phase is used to determine a scale that should be applied. A comparison of an existing profile and a derived solution option profile once scaling has been performed may also be made. The profile(s) in the profile pool are evaluated to determine whether each profile is at least as accurate as a desired/default value (block 412 of FIG. 4). If each profile is at least as accurate as the desired accuracy (block 412), a check is made to see whether an exit condition is satisfied (block 414). An exit condition may be, for example, the profile pool overall having a desired/default accuracy and/or the profile pool having a desired/default number of profiles, though other conditions may be used as appropriate, necessary, and/or desired. If an exit condition has been satisfied (block 414), a check is made to determine whether the method should be repeated or performed for additional components (block 416). If the method should be repeated, it may acquire component information (block 404) and proceed with blocks 408-418. If in block 412 at least one profile is determined to be less accurate than desired, the profile(s) may be removed (block 418) and the method may proceed to block 414. When a determination in block 418 is made that no more repetitions are necessary and/or no additional component is to be considered, the profile pool with the profiles that remain may be considered complete and may be used (block 420), and the method may stop (block 422).

In embodiments, the determination of the degree of accuracy (block 314 in FIG. 3, block 416 in FIG. 4) may be made by comparing a derived solution option profile with an existing profile. The comparison may be made on a basis of a difference in accuracy of a derived solution option profile and an existing profile. For example, when an existing profile is less than or equal to a derived solution option profile plus a difference in accuracy, then the existing profile may be used. In addition, for example, when an existing profile is greater than a derived solution option profile plus a difference in accuracy, then the derived solution option profile may be used.

Embodiments of the invention thus allow control of profile pool size to keep the number of profiles manageable while creating profiles for each component, MoY, DoW, and/or phase where it makes sense from an accuracy perspective. Controlling profile pool size also reduces processing overhead to improve forecast speed and reduce energy costs associated with performing load forecasting. Where prior art distributed management systems (DMSs) in particular, may become overwhelmed by an infusion of data as a number of devices and associated profiles increases, embodiments of the invention actually perform better as a number of profiles considered for inclusion in the profile pool increases. In particular, as a number of profiles considered increases, accuracy of forecasting also increases, and embodiments of the invention further allow a user to control a trade-off of accuracy versus the number of profiles considered and/or included in a profile pool (profile pool size). As a result, embodiments of the invention not only handle scalability issues that occur with large DMSs, but provide better, faster, more efficient load forecasting than prior art techniques for such large DMSs.

Some sample results of embodiments using a number of desired accuracies appear in Table 1. Using a best possible accuracy designation in embodiments, a profile pool of 133 profiles was generated with a resulting accuracy of 11.5344%, as seen in Table 1. Using a desired accuracy of 11.6175%, a profile pool of 42 power demand profiles was generated with a resulting accuracy of 11.6114%. A smallest profile pool of six power demand profiles was generated by designating a desired accuracy of 12%, which had a resulting accuracy of 11.8519%. Thus, employing embodiments resulted in a very significant reduction in profile pool size while retaining accuracy very close to that of traditional techniques - in one test run, reducing the profile pool size from 252 to 6 was a 97.62% reduction in profile pool size with only 0.24% change in accuracy.

**Table 1- Results using test data**

| **Desired Accuracy** | **Result Accuracy** | **Number of Profiles** | **% Reduction Pool Size** |
|---|---|---|---|
| Traditional | 11.6175 % | 252 | 0 |
| Best Possible | 11.5344 % | 133 | 47.2% |
| 11.6175% | 11.6114 % | 42 | 83.33 % |
| 12.0 % | 11.8519 % | 6 | 97.62 % |

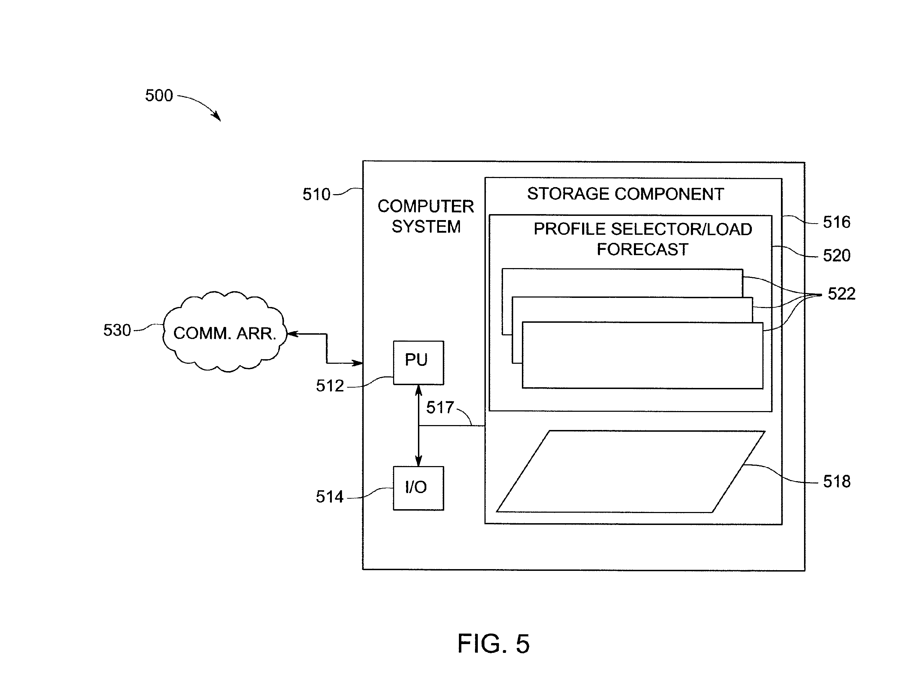

Turning to FIG. 5, an illustrative environment 500 for a power distribution network load forecasting computer program product according to an embodiment is schematically illustrated. To this extent, environment 500 includes a computer system 510, such as an IED or a substation computer or other computing device suitable for use in power distribution networks, that may perform a process described herein in order to execute a power distribution network load forecasting method according to embodiments. In particular, computer system 510 is shown including a power distribution network load forecasting program 520, which makes computer system 510 operable to forecast power demand/load for a power distribution network by performing a process described herein, such as an embodiment of the power distribution network load forecasting method discussed above.

Computer system 510 is shown including a processing component or unit (PU) 512 (e.g., one or more processors), an input/output (I/O) component 514 (e.g., one or more I/O interfaces and/or devices), a storage component 516 (e.g., a storage hierarchy, which may include a computer readable storage medium), and a communications pathway 517. In general, processing component 512 executes program code, such as power distribution network load forecasting program 520, which is at least partially fixed in storage component 516, which may include one or more computer readable storage medium or device. While executing program code, processing component 512 may process data, which may result in reading and/or writing transformed data from/to storage component 516 and/or I/O component 514 for further processing. Pathway 517 provides a communications link between each of the components in computer system 510. I/O component 514 may comprise one or more human I/O devices, which enable a human user to interact with computer system 510 and/or one or more communications devices to enable a system user to communicate with computer system 510 using any type of communications link. In embodiments, a communications arrangement 530, such as networking hardware/software, enables computing device 510 to communicate with other devices in and outside of a substation in which it is installed. To this extent, power distribution network load forecasting program 520 may manage a set of interfaces (e.g., graphical user interface(s), application program interface, and/or the like) that enable human and/or system users to interact with power distribution network load forecasting program 520. Further, power distribution network load forecasting program 520 may manage (e.g., store, retrieve, create, manipulate, organize, present, etc.) data, such as power distribution network load forecasting data 518, using any solution.

Computer system 510 may comprise one or more general purpose computing articles of manufacture (e.g., computing devices) capable of executing program code, such as power distribution network load forecasting program 520, installed thereon. As used herein, it is understood that "program code" means any collection of instructions, in any language, code or notation, that cause a computing device having an information processing capability to perform a particular action either directly or after any combination of the following: (a) conversion to another language, code or notation; (b) reproduction in a different material form; and/or (c) decompression. Additionally, computer code may include object code, source code, and/or executable code, and may form part of a computer program product when on at least one computer readable medium and/or a computer readable storage medium. It is understood that the term "computer readable medium" may comprise one or more of any type of tangible medium of expression, now known or later developed, from which a copy of the program code may be perceived, reproduced, or otherwise communicated by a computing device. For example, the computer readable medium may comprise: one or more portable storage articles of manufacture; one or more memory/storage components of a computing device; paper; and/or the like. Examples of memory/storage components include magnetic media (floppy diskettes, hard disc drives, tape, etc.), optical media (compact discs, digital versatile/video discs, magneto-optical discs, etc.), random access memory (RAM), read only memory (ROM), flash ROM, erasable programmable read only memory (EPROM), or any other computer readable storage medium now known and/or later developed and/or discovered on which the computer program code is stored and with which the computer program code can be loaded into and executed by a computer. When the computer executes the computer program code, it becomes an apparatus for practicing the invention, and on a general purpose microprocessor, specific logic circuits are created by configuration of the microprocessor with computer code segments. A technical effect of the executable instructions is to implement a power distribution network load forecasting method and/or system and/or computer program product that provides smaller profile pools for use in power load forecasting while retaining accuracy of typical techniques, thus improving speed of and reducing processing power required to implement power demand forecasting. An additional technical effect of embodiments of the invention is that load forecasting becomes more accurate as a number of profiles considered for inclusion in the profile pool increases, allowing forecasting for very large numbers of loads/devices, potentially down to the level of individual end user devices, such as appliances and household electronics.

The computer program code may be written in computer instructions executable by the controller, such as in the form of software encoded in any programming language. Examples of suitable programming languages include, but are not limited to, assembly language, VHDL (Verilog Hardware Description Language), Very High Speed IC Hardware Description Language (VHSIC HDL), FORTRAN (Formula Translation), C, C++, C#, Java, ALGOL (Algorithmic Language), BASIC (Beginner All-Purpose Symbolic Instruction Code), APL (A Programming Language), ActiveX, HTML (HyperText Markup Language), XML (extensible Markup Language), and any combination or derivative of one or more of these and/or others now known and/or later developed and/or discovered. To this extent, power distribution network load forecasting program 520 may be embodied as any combination of system software and/or application software.

Further, power distribution network load forecasting program 520 may be implemented using a set of modules 522. In this case, a module 522 may enable computer system 510 to perform a set of tasks used by power distribution network load forecasting program 520, and may be separately developed and/or implemented apart from other portions of power distribution network load forecasting program 520. As used herein, the term "component" means any configuration of hardware, with or without software, which implements the functionality described in conjunction therewith using any solution, while the term "module" means program code that enables a computer system 510 to implement the actions described in conjunction therewith using any solution. When fixed in a storage component 516 of a computer system 510 that includes a processing component 512, a module is a substantial portion of a component that implements the actions. Regardless, it is understood that two or more components, modules, and/or systems may share some/all of their respective hardware and/or software. Further, it is understood that some of the functionality discussed herein may not be implemented or additional functionality may be included as part of computer system 510.

When computer system 510 comprises multiple computing devices, each computing device may have only a portion of power distribution network load forecasting program 520 fixed thereon (e.g., one or more modules 522). However, it is understood that computer system 510 and power distribution network load forecasting program 520 are only representative of various possible equivalent computer systems that may perform a process described herein. To this extent, in other embodiments, the functionality provided by computer system 510 and power distribution network load forecasting program 520 may be at least partially implemented by one or more computing devices that include any combination of general and/or specific purpose hardware with or without program code. In each embodiment, the hardware and program code, if included, may be created using standard engineering and programming techniques, respectively.

Regardless, when computer system 510 includes multiple computing devices, the computing devices may communicate over any type of communications link. Further, while performing a process described herein, computer system 510 may communicate with one or more other computer systems using any type of communications link. In either case, the communications link may comprise any combination of various types of wired and/or wireless links; comprise any combination of one or more types of networks; and/or utilize any combination of various types of transmission techniques and protocols now known and/or later developed and/or discovered.

As discussed herein, power distribution network load forecasting program 520 enables computer system 510 to implement a power distribution network load forecasting product and/or method, such as that shown schematically in FIGS. 3 and/or 4. Computer system 510 may obtain power distribution network load forecasting data 518 using any solution. For example, computer system 510 may generate and/or be used to generate power distribution network load forecasting data 518, retrieve power distribution network load forecasting data 518 from one or more data stores, receive power distribution network load forecasting data 518 from another system or device in or outside of the substation, and/or the like.

In another embodiment, the invention provides a method of providing a copy of program code, such as power distribution network load forecasting program 520, which implements some or all of a process described herein, such as that shown schematically in and described with reference to FIGS. 3 and/or 4. In this case, a computer system may process a copy of program code that implements some or all of a process described herein to generate and transmit, for reception at a second, distinct location, a set of data signals that has one or more of its characteristics set and/or changed in such a manner as to encode a copy of the program code in the set of data signals. Similarly, an embodiment of the invention provides a method of acquiring a copy of program code that implements some or all of a process described herein, which includes a computer system receiving the set of data signals described herein, and translating the set of data signals into a copy of the computer program fixed in at least one computer readable medium. In either case, the set of data signals may be transmitted/received using any type of communications link.

In still another embodiment, the invention provides a method of generating a system for implementing a power distribution network load forecasting product and/or method. In this case, a computer system, such as computer system 510 (FIG. 5), can be obtained (e.g., created, maintained, made available, etc.), and one or more components for performing a process described herein can be obtained (e.g., created, purchased, used, modified, etc.) and deployed to the computer system. To this extent, the deployment may comprise one or more of: (1) installing program code on a computing device; (2) adding one or more computing and/or I/O devices to the computer system; (3) incorporating and/or modifying the computer system to enable it to perform a process described herein; and/or the like.

It is understood that aspects of the invention can be implemented as part of a business method that performs a process described herein on a subscription, advertising, and/or fee basis. That is, a service provider could offer to implement a power distribution network load forecasting product and/or method as described herein. In this case, the service provider can manage (e.g., create, maintain, support, etc.) a computer system, such as computer system 510 (FIG. 5), that performs a process described herein for one or more customers. In return, the service provider can receive payment from the customer(s) under a subscription and/or fee agreement, receive payment from the sale of advertising to one or more third parties, and/or the like.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A power distribution network (100) load forecasting method, the power distribution network (100) comprising a power source (222), a master station (224), a transmission network (226), and a load (228), the method comprising:
accessing power usage data from the load (228);
identifying the load (228);
acquiring at least one target value, including at least a desired accuracy;
acquiring, based on the power usage data and the identifying information, a derived solution option power demand profile (232, 234, 236);
acquiring, based on the power usage data and the identifying information, an existing power demand profile (232, 234, 236);
determining a respective accuracy of each acquired power demand profile (232, 234, 236);
comparing each respective accuracy to the desired accuracy;
repeating the acquiring a derived solution option power demand profile (232, 234, 236), the acquiring an existing power demand profile (232, 234, 236), the determining a respective accuracy of each acquired power demand profile (232, 234, 236), and the comparing each respective accuracy to the desired accuracy until each power demand profile (232, 234, 236) is at least as accurate as the desired accuracy; and
storing each power demand profile (232, 234, 236) that is at least as accurate as the desired accuracy in a profile pool (216).

2. The load forecasting method of claim 1, wherein the repeating continues until an exit condition is satisfied, the exit condition being that a profile pool (216) size reaches a predefined size.

3. The load forecasting method of claim 1 or 2, wherein the repeating continues until an accuracy of the profile pool (216) overall is at least the desired accuracy.

4. The load forecasting method of any of claims 1 to 3, further comprising creating a power demand forecast using at least the power demand profile (219) that is at least as accurate as the desired accuracy.

5. The load forecasting method of any of claims 1 to 4, wherein the existing power demand profile (218) is considered to be at least as accurate as the desired accuracy when the existing profile (218) is less than or equal to the derived solution option power demand profile (219) plus a difference in accuracy.

6. The load forecasting method of any of claims 1 to 5, wherein the derived solution option power demand profile (219) is considered to be at least as accurate as the desired accuracy when the existing power demand profile (218) is greater than the derived solution option power demand profile (219) plus a difference in accuracy.

7. The load forecasting method of any preceding claim, wherein an existing power demand profile (218) is designated from a previously generated profile pool (216).

8. The load forecasting method of any preceding claim, wherein the profile pool (216) includes a reference relating a profile to at least one of a component, a day of the week, a month of the year, and a phase to which the respective profile corresponds.

9. A computer program for power distribution network load forecasting, the power distribution network (100) comprising a power source (222), a master station (224) a transmission network (226), and a load (228), the computer program product comprising computer program code means adapted to perform the steps of the method of any of claims 1 to 8 when executed by a computer.

10. The computer program of claim 9, embodied on a computer readable medium.

11. A load forecasting system (200) for a power distribution network (100), the power distribution network (100) comprising a power source (222), a master station (224), a transmission network (226), and a load (228), the system comprising:
a computing device (210) configured to communicate with and receive power usage data from the load (228);
an object that is a computer readable storage medium (516) configured to allow access by the computing device (210);
a power demand profile database (230) stored on the computer readable storage medium (516), the power demand profile database (230) including a power demand profile (232, 234, 236);
a profile selector (212) formed by computer program code executed in the computing device (210), the profile selector (212) being configured to acquire at least one target value, a desired accuracy, the power usage data, and a power demand profile, and to repeat until an exit condition is satisfied a method including:
designating a derived solution option power demand profile (219) based on the power usage data;
designating an existing power demand profile (218);
determining a respective accuracy of each acquired power demand profile (218, 232, 234, 236);
comparing the respective accuracy to the desired accuracy;
responsive to a power demand profile (218, 219, 232, 234, 236) being at least as accurate as the desired accuracy, selecting the power demand profile (218, 219, 232, 234, 236) that is at least as accurate as the desired accuracy;
responsive to no power demand profile (218, 219, 232, 234, 236) being at least as accurate as the desired accuracy, acquiring another of each power demand profile (232, 234, 236) and repeating at least the determining and the comparing; and
storing each selected power demand profile in a profile pool (216) on the computer readable storage medium (516).

12. The load forecasting system (200) of claim 11, wherein the method executed by the profile selector (212) further comprises creating a power demand forecast using at least the power demand profile (218, 219, 232, 234, 236) that is at least as accurate as the desired accuracy.

13. The load forecasting system (200) of claim 11 or 12, wherein the existing power demand profile (218) is considered to be at least as accurate as the desired accuracy when the existing profile (218) is less than or equal to the derived solution option power demand profile (219) plus a difference in accuracy.

14. The load forecasting system (200) of any of claims 11 to 13, wherein the derived solution option power demand profile (219) is considered to be at least as accurate as the desired accuracy when the existing power demand profile (218) is greater than the derived solution option power demand profile (219) plus a difference in accuracy.

15. The load forecasting system (200) of any of claims 11 to 14, wherein an existing power demand profile (218) is designated from a previously generated profile pool (216).
